# EUROPEAN PATENT SPECIFICATION

(11) **EP 1 523 891 B1**
(45) Date of publication and mention of the grant of the patent: **31.05.2006**
(21) Application number: 04077636.1
(22) Date of filing: 22.09.2004
(51) Int. Cl.: A23C 9/13, A23C 9/137

(54) **Meal replacement product and method for the preparation thereof**
Zusammensetzung zum Ersetzen einer Mahlzeit und Verfahren zur Herstellung
Composition pour le remplacement d'un repas et procédé de sa préparation

(30) Priority: 13.10.2003 NL 1024527
(43) Date of publication of application: 20.04.2005
(73) Proprietor: Campina B.V., 5301 LB Zaltbommel (NL)
(72) Inventor: Jonkvorst, Jeanet, 8064 BD Zwartsluis (NL)
(74) Representative: Bot, David Simon Maria

(56) References cited:
- EP-A- 0 187 575
- EP-A- 0 809 939
- WO-A-98/05221
- DE-A- 19 615 369
- DE-B- 1 131 978
- US-A1- 2001 043 967
- US-A1- 2002 119 948
- US-B1- 6 299 914
- US-B1- 6 544 567

## Description

The present invention relates to a meal replacement product in drinkable form, based on fermented milk which is enriched with protein and to which vitamins, minerals and oils are added in the quantities prescribed by food regulation statutes, and which also includes materials selected from flavourings, sweeteners, aromas, colorants, stabilizers, fruit constituents and food fibre to provide the product with the properties desired by the consumer.

A product of this type is known from Dutch Patent 1003748 (corresponding to WO 98/05221).

The meal replacement product described in the abovementioned publication is a product which is enriched with protein obtained from the eggs of birds, such as hens.
In view of the current risks of eggs being contaminated with Salmonella bacteria, protein derived from eggs is currently somewhat undesirable. Milk protein is preferable in terms of microbiological safety.
Furthermore, the product described in the abovementioned publication has a long shelf life, which is obtained by selecting ingredients and preparation steps and/or conditions which affect the flavour of the product.

It is an object of the present invention to provide a meal replacement product of the type described which contains exclusively milk protein or protein derived therefrom, and furthermore has in particular an improved flavour compared to the known product, and to this end the present invention is characterized in that the product comprises:
- yoghurt which is enriched with milk protein,
- live yoghurt bacteria,
- a mixture of vegetable oils,
- a mixture of natural and synthetic sweeteners,
- a stabilizer based on starch, and
the product has a viscosity measured at 7°C of from 10-16 mPa.s and can be stored in the refrigerator.

The composition of meal replacement products is subject to food regulatory statute control; reference is made, for example, to the Dutch regulation on Energy-limited diets (Dutch Ministry for Health, Welfare and Sport, 10-3-1987 GZB/VVB 971233).

According to the above regulations in the Netherlands, a meal replacement in portions of 330 ml should have a calorific value of at least 840 kJ (200 kcal) and at most 1680 kJ (400 kcal), with the energy derived from protein amounting to at least 25% and at most 50% of the total energy content. Furthermore, the product should include 30% of the recommended daily allowance of vitamins and minerals. In addition, each portion should contain at least one gram of linoleic acid. The energy derived from fat should be at most 30% of the total energy content. The enriching of the yoghurt with milk protein is preferably carried out using milk protein with a natural casein/whey protein ratio of 80:20 (w/w). The present invention uses an additional quantity of whey protein, which has a further positive influence on the amino acid composition of the proteins. The addition of whey protein changes the casein/whey protein ratio to approximately 70:30.

The vegetable oil is preferably added in the form of a mixture of vegetable oils, as will be explained in more detail below.

According to the invention, the sweeteners which are generally used in a meal replacement product are provided as a mixture of natural and synthetic sweeteners.

The stabilizer used in the abovementioned Dutch patent is pectin. The purpose of pectin is to protect the product with a long shelf life from sedimentation and/or serum formation. For this pectin to be effective, the yoghurt has to be homogenized after fermentation. The result is that the product becomes very thin. In addition, the product with a long shelf life has to be protected against taste changes resulting from the metabolic activity of the yoghurt bacteria. This requires pasteurization of the yoghurt after fermentation, which in turn kills the live cultures. The present invention uses a stabilizer based on starch, allowing the abovementioned homogenization and pasteurization steps following fermentation to be dispensed with.

The composition of the present meal replacement product and its preparation are selected in such a manner that the product has to be stored in the refrigerator, i.e. at temperatures which are lower than 7°C, preferably between 4 and 7°C, for at most 28 days without any deterioration or noticeable change in consistency occurring. The meal replacement product according to the invention comprises yoghurt which is enriched with milk protein; the milk protein content of the yoghurt is at least 4.2% by weight.

By way of example, low-fat yoghurt contains 0.05% milk fat and 3.45% protein. In the present invention, the protein content is increased to at least 4.2% by weight. This quantity of protein is selected in order to ensure that the protein from the yoghurt contributes a calorific value of 50 kcal per 330 ml portion, while the remaining constituents contribute the remainder up to 200 kcal.

As has already been indicated, the meal replacement product comprises a mixture of vegetable oils. This is on the one hand in order to satisfy the requirements relating to linoleic acid and the other hand to introduce a quantity of linolenic acid, which is desirable from nutritional aspects, into the product. It is preferable to use a mixture of linoleic acid and linolenic acid in a weight ratio of 5:1.

The sweeteners which are present in the meal replacement product are a mixture of natural and synthetic sweeteners, and the ratio of these materials is selected in such a manner that the calorific value of a 330 gram portion of the meal replacement product is set accurately to 200 kcal. The calorific value can be highly accurately set to the desired minimum of 200 kcal by suitable selection of the ratio between natural and synthetic sweeteners. The 200 kcal value is aimed at weight reduction. Obviously, if desired it is also possible to select a value other than the minimum of 200 kcal.

The synthetic sweetener is generally present in a quantity of up to 3% by weight, based on the total quantity of the sweeteners. The natural sweetener will preferably be sugar.

More specifically, the synthetic sweetener or a mixture of various synthetic sweeteners will be present in a quantity of up to 2.5% by weight, based on the total quantity of the sweeteners.

As has been indicated above, a stabilizer based on starch is present. The stabilizer preferably comprises native starch in a quantity of 0.05 - 1.0% by weight, based on the total composition of a product, and preferably in a quantity of approximately 0.3% by weight.

The viscosity of the meal replacement product is preferably between 12 and 15 mPa.s at 7°C.

The meal replacement product according to the invention, which can be stored in the refrigerator, is packaged in a container of the type which is customary for dairy products, such as a PET bottle, a square plastic yoghurt tub or a gable-top carton.

A typical composition of a meal replacement product in drinkable form according to the invention is as follows:
- low-fat yoghurt 82.1%
- milk protein constituents 2.0%
- starch 0.3%
- sugar 4.1%
- food fibre 2.6%
- fruit juice 1.0%
- vegetable oil 1.0%
- vitamins, minerals 0.2%
- flavourings and colorants <0.1%
- synthetic sweeteners <0.1%
- water <6.6%

The total of the composition is 100%, and of course the abovementioned quantities add up to 100%.

With regard to the minerals, it should be noted that specifically phosphorus, calcium, magnesium, iron, selenium, manganese, zinc, iodine and copper are present in amounts of at least 30% of the recommended daily allowance (RDA). Extensive research into the form in which in particular iron, copper, magnesium and potassium are provided has revealed that the best results were obtained with iron in the form of iron pyrophosphate, copper in the form of copper gluconate, magnesium in the form of magnesium phosphate and potassium in the form of potassium citrate.

In particular, the quantity of potassium citrate is kept at a minimum, since potassium is present in considerable quantities in milk, and is therefore merely topped up to meet the level prescribed by food regulatory statutes. Adding excessive potassium leads to a deterioration in the taste.

The invention also relates to a method for preparing a meal replacement product in drinkable form, based on fermented milk which is enriched with protein, to which vitamins, minerals and oils are added in the quantities stipulated by the food regulatory statutes and which also includes materials selected from flavourings, sweeteners, aromas, colorants, stabilizers, fruit constituents and food fibre, to give the preparation the properties desired by the consumer, wherein:
- milk is enriched with protein, is inoculated with lactic acid bacteria and is fermented until yoghurt of the desired acidity is formed,
- the desired ingredients are mixed with the yoghurt which has been formed, while in the method pasteurization and/or homogenization steps are being carried out as desired.

This method is characterized in that
a) yoghurt milk is enriched with milk protein, a mixture of vegetable oils is added and the yoghurt milk mixture, after the required homogenization, pasteurization and cooling steps, is inoculated with a suitable lactic acid bacteria culture, after which the yoghurt milk mixture is allowed to ferment; after the fermentation, the yoghurt which has formed is stirred up and cooled to ambient temperature,
b) a syrup is made by mixing water with synthetic sweetener, food acid and a stabilizer; the mixture formed is heated to a selected temperature; at the selected temperature, natural sweetener, food fibres and fruit juice concentrate are added, and the mixture obtained in this way is pasteurized; colorant(s), flavouring(s) and a mixture of the desired vitamins and minerals are added to the pasteurized mixture, after which the syrup formed in this way is added to the yoghurt formed under a),
c) the yoghurt formed under a) and the syrup formed under b) are mixed.

In the above-described method, as has been indicated, yoghurt milk is enriched with milk protein and a mixture of vegetable oils, after which yoghurt is made; a syrup which comprises all the other constituents of the meal replacement product is made separately, after which the yoghurt and the syrup are mixed.

In this context, it is important that when forming the syrup the colorant(s), flavouring(s) and a mixture of the desired vitamins and minerals, in quantities which amount to at least 30% of the recommended daily allowance, are added after the pasteurization of a mixture of water, synthetic sweetener, food acid, stabilizer, natural sweetener, food fibres and fruit juice concentrate. In this way, on the one hand the colour and flavour are virtually completely retained, while the quantity of vitamins and minerals added can amount to virtually the quantity theoretically required, since there is no possibility of them being broken down under the pasteurization conditions. Enrichment with milk protein has expediently taken place up to a quantity of at least 4.2% by weight, based on the yoghurt formed; the milk protein comprises an additional quantity of whey protein. The mixture of vegetable oils is a mixture of linoleic acid and linolenic acid.

The ratio of natural sweetener to synthetic sweetener is preferably selected in such a manner that the calorific value of a 330 gram portion of the meal replacement product turns out to be 200 kcal. The stabilizer is preferably a native starch.

The syrup and the yoghurt are expediently mixed in a weight ratio of approximately 15:85.

The synthetic sweetener is present in a quantity of up to 3% by weight, based on the total quantity of sweeteners, while native starch is present in a quantity of between 0.05 and 1.0% by weight, based on the total composition of the product.

It is preferable for the synthetic sweetener or a mixture of synthetic sweeteners to be present in a quantity of up to approximately 2.5%, based on the weight of the total quantity of sweeteners, while native starch is preferably present in a quantity of approximately 0.3% by weight, based on the total weight of the product.

The steps of homogenization, pasteurization and cooling prior to the inoculation to form the yoghurt are carried out under the following respective conditions: 100 bar, 62°C, 95°C, 5 minutes and 41°C.

The heating to a selected temperature prior to the pasteurization during the formation of the syrup is carried out up to 75°C, while the pasteurization takes place at 75°C for 15 minutes.

After the yoghurt to which milk protein and vegetable oil have been added and the syrup have been mixed, the mixture formed is subjected to shear forces in order to impart the desired smooth consistency and viscosity to the mixture, after which the mixture is cooled to refrigerator temperature (lower than 7°C).

The step of subjecting the mixture of yoghurt and syrup to shear forces can be carried out in various ways; it is an attractive option to use an "Ystrall" in-line homogenizer (shear mixer). A product with the desired stiff consistency is obtained at a temperature of approximately 35°C and a shearing rate of approximately 12000 sec ⁻¹.

To finish the above-described method, the meal replacement product formed is packaged in a container of the type which is customary for dairy products as described above.

There now follows a production flowchart which is suitable for use in the method according to the invention:

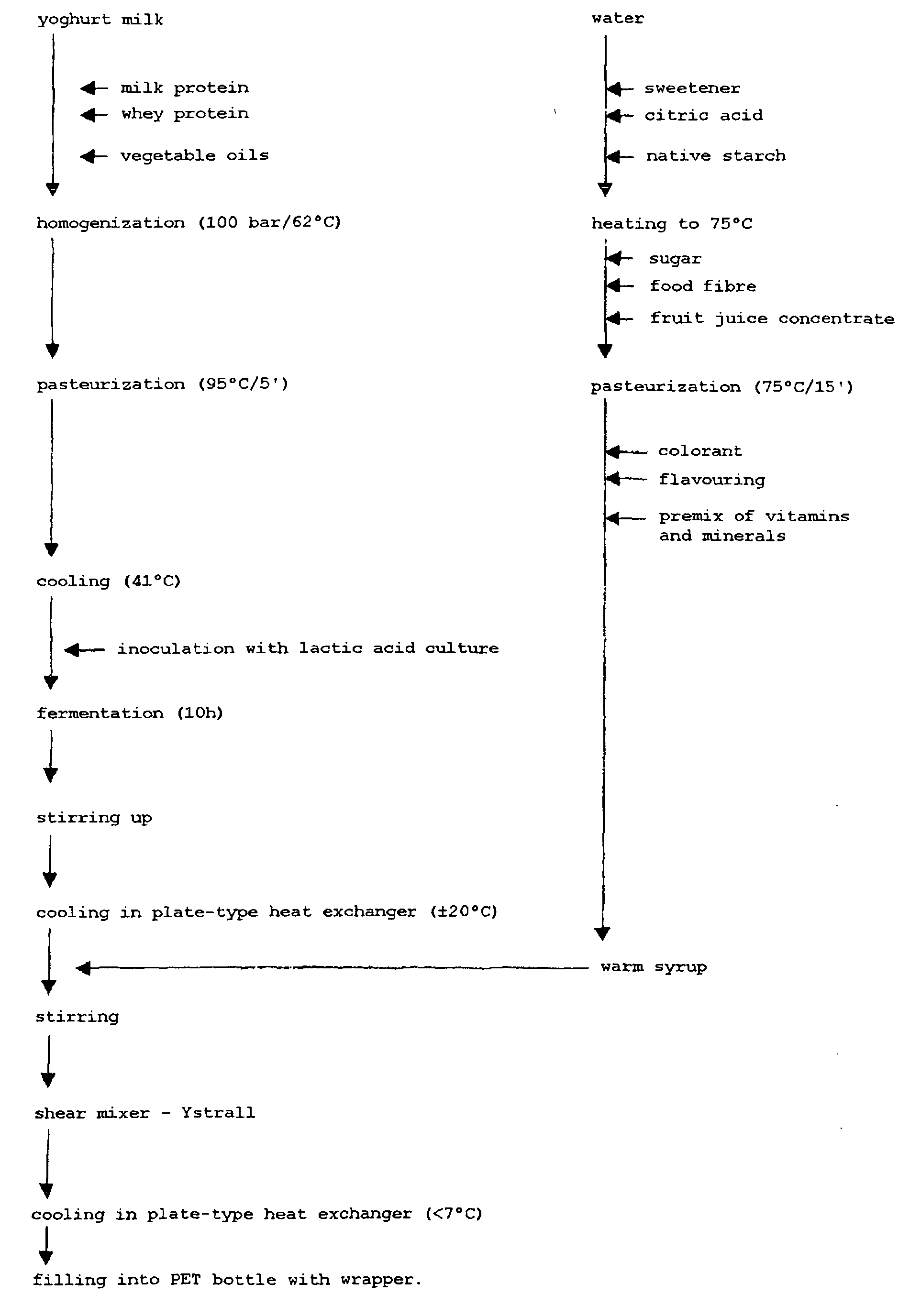

It should be noted that the cooling is preferably carried out in a plate-type heat exchanger and that the usual yoghurt cultures can be used.

The above-described meal replacement products may, of course, have a wide range of tastes depending on the type of fruit selected. The strawberry, raspberry, peach and lemon varieties have been produced, and in particular the strawberry, raspberry and peach varieties have been assessed as highly appealing.

Extensive taste tests were carried out on the meal replacement product according to the invention. A group of 80 people, women aged 25-45 and users of supermarket ready-to-eat meals, participated in the research.
An overall judgement on a scale from 1 to 9 (1 is very poor and 9 is very good) was obtained.
A strawberry product according to the present invention scored 6.6; peach scored 6.9 and raspberry 7.0.
The same test was also used to evaluate a commercially available dairy-based drink with a long shelf life, which scored 3.8. The results of the test illustrate the consumption properties which are obtained with the product according to the invention with its live cultures. The present product was found to retain the typical yoghurt flavour, and the character of a natural and fresh meal replacement is evident. The viscosity of a meal replacement product is slightly higher than that of products which are comparable in terms of their intended use.

Meal replacement product according to the application:

| | |
|---|---|
| Raspberry : | 12.3 mPa.s |
| Peach : | 14.8 mPa.s |
| Comparable product : | |
| Strawberry : | 7.4 mPa.s |
| Peach : | 8.5 mPa.s. |

The measurement was carried out using a Rheometrics RFSII device. Parallel plates with a diameter of 50 mm were used. The distance between the two parallel plates was 2.0 mm, and the measurement was carried out at 7°C. The measurement used a shearing rate of 100 sec ⁻¹ for 30 seconds. The product according to the invention has a stiff consistency, with the result that a fuller mouthfeel is obtained than the product with which it was compared. The consumer's feeling of satisfaction is also increased as a result.

## Claims

1. Meal replacement product in drinkable form, based on fermented milk which is enriched with protein and to which vitamins, minerals and oils are added in the quantities prescribed by food regulation statutes, and which also includes materials selected from flavourings, sweeteners, aromas, colorants, stabilizers, fruit constituents and food fibre to provide the product with the properties desired by the consumer, **characterized in that** the product comprises:
- yoghurt which is enriched with milk protein,
- live yoghurt bacteria,
- a mixture of vegetable oils,
- a mixture of natural and synthetic sweeteners,
- a stabilizer based on starch, and
the product has a viscosity of between 10 and 16 mPa.s at 7°C and can be stored in the refrigerator.

2. Meal replacement product according to claim 1, **characterized in that** the milk protein comprises an additional quantity of whey protein.

3. Meal replacement product according to claim 2, **characterized in that** the milk protein content is at least 4.2% by weight.

4. Meal replacement product according to one or more of claims 1-3, **characterized in that** the mixture of vegetable oils is a mixture of linoleic acid and linolenic acid in a weight ratio of 5:1.

5. Meal replacement product according to one or more of claims 1-4, **characterized in that** the ratio of natural sweetener to synthetic sweetener is selected so as to set the calorific value of a 330 gram portion of the meal replacement product to 220 Kcal.

6. Meal replacement product according to claim 5, **characterized in that** the synthetic sweetener is present in a quantity of up to 3% by weight, based on the total quantity of the sweeteners, and the natural sweetener is sugar.

7. Meal replacement product according to claims 5-6, **characterized in that** the synthetic sweetener or a mixture of various synthetic sweeteners is present in a quantity of up to 2.5% by weight, based on the total quantity of the sweeteners.

8. Meal replacement product according to one or more of the preceding claims, **characterized in that** the stabilizer comprises native starch in a quantity of 0.05-1.0% by weight, based on the total composition of the product.

9. Meal replacement product according to claim 8, **characterized in that** native starch is present in a quantity of approximately 0.3% by weight.

10. Meal replacement product according to claims 1-9, **characterized in that** the viscosity is 12-15 mPa.s at 7°C.

11. Meal replacement product according to one or more of claims 1-10, **characterized in that** among the minerals that are present, the iron is present in the form of iron pyrophosphate, the copper is present in the form of copper gluconate, the magnesium is present in the form of magnesium sulphate and the potassium is present in the form of potassium citrate.

12. Meal replacement product according to one or more of the preceding claims, **characterized in that** it is packaged in a container of the type which is customary for dairy products.

13. Method for preparing a meal replacement product in drinkable form, based on fermented milk which is enriched with protein, to which vitamins, minerals and oils are added in the quantities stipulated by the food regulatory statutes and which also includes materials selected from flavourings, sweeteners, aromas, colorants, stabilizers, fruit constituents and food fibre, to give the preparation the properties desired by the consumer, wherein:
- milk is enriched with protein, is inoculated with lactic acid bacteria and is fermented until yoghurt of the desired acidity is formed,
- the desired ingredients are mixed with the yoghurt which has been formed, while in the method pasteurization and/or homogenization steps are being carried out as desired,
**characterized in that**
a) yoghurt milk is enriched with milk protein, a mixture of vegetable oils is added and the yoghurt milk mixture, after the required homogenization, pasteurization and cooling steps, is inoculated with a suitable lactic acid bacteria strain, after which the yoghurt milk mixture is allowed to ferment; after the fermentation, the yoghurt which has formed is stirred up and cooled to ambient temperature,
b) a syrup is made by mixing water with synthetic sweetener, food acid and a stabilizer; the mixture formed is heated to a selected temperature; at the selected temperature, natural sweetener, food fibres and fruit juice concentrate are added, and the mixture obtained in this way is pasteurized; colorant(s), flavouring(s) and a mixture of the desired vitamins and minerals are added to the pasteurized mixture, after which the syrup formed in this way is added to the yoghurt formed under a),
c) the yoghurt formed under a) and the syrup formed under b) are mixed.

14. Method according to claim 13, **characterized in that**
a) the milk protein for enriching the yoghurt milk comprises an additional quantity of whey protein, and the total milk protein content of the yoghurt formed is at least 4.2% by weight, while the mixture of vegetable oils is a mixture of linoleic acid and linolenic acid,
b) the ratio of the natural sweetener to the synthetic sweetener is selected to set the calorific value of a 330 gram portion of the meal replacement product to 200 Kcal, and the stabilizer is native starch,
c) the syrup and the yoghurt are mixed in a weight ratio of 15:85.

15. Method according to claims 13-14, **characterized in that**:
a) the total milk protein content of the yoghurt formed is 4.2% by weight, and linoleic acid and linolenic acid are present in a weight ratio of 5:1,
b) **in that** the synthetic sweetener is present in a quantity of up to 3% by weight, based on the total quantity of sweeteners, and the natural sweetener is sugar, while native starch is present in a quantity of 0.05 - 1.0% by weight, based on the total composition of the product.

16. Method according to claim 15, **characterized in that**
b) the synthetic sweetener or a mixture of synthetic sweeteners is present in a quantity of up to 2.5% by weight, based on the total quantity of sweeteners, while native starch is present in a quantity of approximately 0.3% by weight.

17. Method according to one or more of claims 13-16, **characterized in that**
a) the steps of homogenization, pasteurization and cooling prior to the inoculation are carried out under the following respective conditions: 100 bar, 62°C; 95°C, 5 min, and down to 41°C,
b) the temperature selected is 75°C and pasteurization is carried out for 15 min at 75°C.

18. Method according to one or more of claims 13-17, **characterized in that**
c) the mixture which is formed is subjected to shear forces in order to impart the desired smooth consistency to the mixture, and is then cooled to refrigerator temperature (< 7°C).

19. Method according to one or more of claims 13-18, **characterized in that** the meal replacement product formed is packaged in a container of the type which is customary for dairy products.

## Patentansprüche

1. Nahrungsersatzprodukt in trinkbarer Form auf Basis von fermentierter Milch, die mit Protein angereichert ist und zu der Vitamine, Mineralien und Öle in den durch Lebensmittelvorschriften vorgeschriebenen Mengen zugesetzt sind und die auch Stoffe ausgewählt aus Geschmacksstoffen, Süßstoffen, Aromastoffen, Farbmitteln, Stabilisatoren, Fruchtbestandteilen und Lebensmittelfasern beinhaltet, um das Produkt mit den vom Verbraucher gewünschten Eigenschaften bereitzustellen, **dadurch gekennzeichnet, dass** das Produkt umfasst:
- Joghurt, der mit Milchprotein angereichert ist,
- lebende Joghurtbakterien,
- eine Mischung von pflanzlichen Ölen,
- eine Mischung von natürlichen und künstlichen Süßstoffen,
- einen Stabilisator auf Basis von Stärke und
das Produkt eine Viskosität zwischen 10 und 16 mPa·s bei 7°C aufweist und im Kühlschrank gelagert werden kann.

2. Nahrungsersatzprodukt nach Anspruch 1, **dadurch gekennzeichnet, dass** das Milchprotein eine zusätzliche Menge an Molkenprotein umfasst.

3. Nahrungsersatzprodukt nach Anspruch 2, **dadurch gekennzeichnet, dass** der Milchproteingehalt mindestens 4,2 Gew.-% beträgt.

4. Nahrungsersatzprodukt nach einem oder mehreren der Ansprüche 1 bis 3, **dadurch gekennzeichnet, dass** die Mischung von pflanzlichen Ölen eine Mischung von Linolsäure und Linolensäure in einem Gewichtsverhältnis von 5:1 ist.

5. Nahrungsersatzprodukt nach einem oder mehreren der Ansprüche 1 bis 4, **dadurch gekennzeichnet, dass** das Verhältnis von natürlichem Süßstoff zu künstlichem Süßstoff so gewählt ist, dass der Kalorienwert einer Portion von 330 g des Nahrungsersatzprodukts auf 220 kcal gebracht wird.

6. Nahrungsersatzprodukt nach Anspruch 5, **dadurch gekennzeichnet, dass** der künstliche Süßstoff in einer Menge von bis zu 3 Gew.-% auf Basis der Gesamtmenge der Süßstoffe vorhanden ist und der natürliche Süßstoff Zucker ist.

7. Nahrungsersatzprodukt nach den Ansprüchen 5 bis 6, **dadurch gekennzeichnet, dass** der künstliche Süßstoff oder eine Mischung von verschiedenen künstlichen Süßstoffen in einer Menge von bis zu 2,5 Gew.-% auf Basis der Gesamtmenge der Süßstoffe vorhanden ist.

8. Nahrungsersatzprodukt nach einem oder mehreren der vorhergehenden Ansprüche, **dadurch gekennzeichnet, dass** der Stabilisator natürliche Stärke in einer Menge von 0,05 bis 1,0 Gew.-% auf Basis der Gesamtzusammensetzung des Produkts umfasst.

9. Nahrungsersatzprodukt nach Anspruch 8, **dadurch gekennzeichnet, dass** die natürliche Stärke von etwa 0,3 Gew.-% vorhanden ist.

10. Nahrungsersatzprodukt nach den Ansprüchen 1 bis 9, **dadurch gekennzeichnet, dass** die Viskosität 12 bis 15 mPa·s bei 7°C beträgt.

11. Nahrungsersatzprodukt nach einem oder mehreren der Ansprüche 1 bis 10, **dadurch gekennzeichnet, dass** von den Mineralien, die vorhanden sind, das Eisen in Form von Eisenpyrophosphat vorhanden ist, das Kupfer in Form von Kupfergluconat vorhanden ist, das Magnesium in Form von Magnesiumsulfat vorhanden ist und das Kalium in Form von Kaliumcitrat vorhanden ist.

12. Nahrungsersatzprodukt nach einem oder mehreren der vorhergehenden Ansprüche, **dadurch gekennzeichnet, dass** es in einem Behältertyp verpackt ist, der für Molkereiprodukte üblich ist.

13. Verfahren zur Herstellung eines Nahrungsersatzprodukts in trinkbarer Form auf Basis von fermentierter Milch, die mit Protein angereichert ist, zu der Vitamine, Mineralien und Öle in von den Lebensmittelvorschriften festgesetzten Mengen zugesetzt werden und die auch Stoffe ausgewählt aus Geschmacksstoffen, Süßstoffen, Aromastoffen, Farbmitteln, Stabilisatoren, Fruchtbestandteilen und Lebensmittelfasern beinhaltet, um der Zubereitung die vom Verbraucher gewünschten Eigenschaften zu geben, wobei:
- Milch mit Protein angereichert wird, mit Milchsäurebakterien geimpft und fermentiert wird, bis Joghurt des gewünschten Säuregrads gebildet wird,
- die gewünschten Bestandteile mit dem Joghurt, der gebildet worden ist, gemischt werden, wobei bei dem Verfahren Pasteurisations- und/oder Homogenisierungsschritte nach Bedarf durchgeführt werden,
**dadurch gekennzeichnet, dass**
a) Joghurtmilch mit Milchprotein angereichert wird, eine Mischung von pflanzlichen Ölen zugegeben wird und die Joghurtmilchmischung, nach den benötigten Homogenisierungs-, Pasteurisations- und Kühlschritten, mit einem geeigneten Milchsäurebakterienstamm geimpft wird, wonach man die Joghurtmilchmischung fermentieren lässt; nach Fermentation der Joghurt, der sich gebildet hat, aufgerührt und auf Umgebungstemperatur abgekühlt wird,
b) ein Sirup durch Mischen von Wasser mit künstlichem Süßstoff, Lebensmittelsäure und einem Stabilisator hergestellt wird; die gebildete Mischung auf eine gewählte Temperatur erwärmt wird; bei der gewählten Temperatur ein natürlicher Süßstoff, Lebensmittelfasern und Fruchtsaftkonzentrat zugegeben werden und die auf diese Weise erhaltene Mischung pasteurisiert wird; ein oder mehrere Farbmittel, ein oder mehrere Geschmacksstoffe und eine Mischung der gewünschten Vitamine und Mineralien zur pasteurisierten Mischung gegeben werden, wonach der auf diese Weise gebildete Sirup zu dem Joghurt gegeben wird, der in a) gebildet wurde,
c) der in a) gebildete Joghurt und der in b) gebildete Sirup gemischt werden.

14. Verfahren nach Anspruch 13, **dadurch gekennzeichnet, dass**
a) das Milchprotein zur Anreicherung der Joghurtmilch eine zusätzliche Menge an Molkenprotein umfasst und der Milchproteingesamtgehalt des gebildeten Joghurts mindestens 4,2 Gew.-% beträgt, wobei die Mischung von pflanzlichen Ölen eine Mischung von Linolsäure und Linolensäure ist,
b) das Verhältnis des natürlichen Süßstoffs zum künstlichen Süßstoff so gewählt wird, dass der Kalorienwert einer Portion von 330 g des Nahrungsersatzprodukts auf 200 kcal gebracht wird, und der Stabilisator natürliche Stärke ist,
c) der Sirup und der Joghurt in einem Gewichtsverhältnis von 15:85 gemischt werden.

15. Verfahren nach den Ansprüchen 13-14, **dadurch gekennzeichnet, dass**
a) der Milchproteingesamtgehalt des gebildeten Joghurts 4,2 Gew.-% beträgt und Linolsäure und Linolensäure in einem Gewichtsverhältnis von 5:1 vorhanden sind,
b) der künstliche Süßstoff in einer Menge von bis zu 3 Gew.-% auf Basis der Gesamtmenge an Süßstoffen vorhanden ist und der natürliche Süßstoff Zucker ist, wobei natürliche Stärke in einer Menge von 0,05 bis 1,0 Gew.-% auf Basis der Gesamtzusammensetzung des Produkts vorhanden ist.

16. Verfahren nach Anspruch 15, **dadurch gekennzeichnet, dass**
b) der künstliche Süßstoff oder eine Mischung von künstlichen Süßstoffen in einer Menge von bis zu 2,5 Gew.-% auf Basis der Gesamtmenge an Süßstoffen vorhanden ist, wobei natürliche Stärke in einer Menge von etwa 0,3 Gew.-% vorhanden ist.

17. Verfahren nach einem oder mehreren der Ansprüche 13 bis 16, **dadurch gekennzeichnet, dass**
a) die Schritte der Homogenisierung, Pasteurisation und Kühlung vor der Impfung unter den folgenden Bedingungen durchgeführt werden: 100 bar, 62°C, 95°C, 5 min und hinunter auf 41 °C,
b) die gewählte Temperatur 75°C ist und die Pasteurisation 15 min bei 75°C durchgeführt wird.

18. Verfahren nach einem oder mehreren der Ansprüche 13 bis 17, **dadurch gekennzeichnet, dass**
c) die Mischung, die sie gebildet hat, Scherkräften unterworfen wird, um der Mischung die gewünschte glatte Konsistenz zu verleihen, und dann auf Kühlschranktemperatur (< 7°C) gekühlt wird.

19. Verfahren nach einem oder mehreren der Ansprüche 13 bis 18, **dadurch gekennzeichnet, dass** das gebildete Nahrungsersatzprodukt in einem Behältertyp verpackt wird, der für Molkereiprodukte üblich ist.

## Revendications

1. Substitut de repas sous forme buvable, à base de lait fermenté qui est enrichi en protéines et auquel des vitamines, des minéraux et des huiles sont ajoutés dans les quantités prescrites par les réglementations relatives aux produits alimentaires et qui comprend également des matériaux choisis parmi des agents aromatisants, des édulcorants, des arômes, des colorants, des agents stabilisants, des constituants issus de fruits et une fibre alimentaire afin d'obtenir le produit ayant les propriétés souhaitées par le consommateur, **caractérisé en ce que** le produit comprend :
- du yaourt qui est enrichi en protéines lactiques,
- des bactéries du yaourt vivantes,
- un mélange d'huiles végétales,
- un mélange d'édulcorants naturels et synthétiques,
- un agent stabilisant à base d'amidon, et
le produit a une viscosité dans la plage de 10 à 16 mPa.s à 7°C et il peut être stocké au réfrigérateur.

2. Substitut de repas selon la revendication 1, **caractérisé en ce que** les protéines lactiques comprennent une quantité supplémentaire de protéines de petit-lait.

3. Substitut de repas selon la revendication 2, **caractérisé en ce que** la teneur en protéines lactiques est d'au moins 4,2% en poids.

4. Substitut de repas selon l'une quelconque des revendications 1 à 3, **caractérisé en ce que** le mélange d'huiles végétales est un mélange d'acide linoléique et d'acide linolénique selon un ratio en poids de 5:1.

5. Substitut de repas selon l'une quelconque des revendications 1 à 4, **caractérisé en ce que** le ratio de l'édulcorant naturel sur l'édulcorant synthétique est choisi de façon à fixer à 220 Kcal la valeur calorique d'une portion de 330 grammes du substitut de repas.

6. Substitut de repas selon la revendication 5, **caractérisé en ce que** l'édulcorant synthétique est présent en une quantité allant jusqu'à 3% en poids, ramenée à la quantité totale des édulcorants, et **en ce que** l'édulcorant naturel est du sucre.

7. Substitut de repas selon les revendications 5 et 6, **caractérisé en ce que** l'édulcorant synthétique ou un mélange de divers édulcorants synthétiques est présent en une quantité allant jusqu'à 2,5% en poids, ramenée à la quantité totale des édulcorants.

8. Substitut de repas selon l'une quelconque des revendications précédentes, **caractérisé en ce que** l'agent stabilisant comprend de l'amidon natif en une quantité allant de 0,05 à 1,0% en poids, ramenée à la composition totale du produit.

9. Substitut de repas selon la revendication 8, **caractérisé en ce que** l'amidon natif est présent en une quantité d'environ 0,3% en poids.

10. Substitut de repas selon les revendications 1 à 9, **caractérisé en ce que** la viscosité est de 12 à 15 mPa.s à 7°c.

11. Substitut de repas selon l'une quelconque des revendications 1 à 10, **caractérisé en ce que**, parmi les minéraux qui sont présents, le fer est présent sous la forme de pyrophosphate de fer, le cuivre est présent sous la forme de gluconate de cuivre, le magnésium est présent sous la forme de sulfate de magnésium et le potassium est présent sous la forme de citrate de potassium.

12. Substitut de repas selon l'une quelconque des revendications précédentes, **caractérisé en ce qu'**il est emballé dans un récipient du type habituel pour des produits laitiers.

13. Procédé de préparation d'un substitut de repas sous forme buvable, à base de lait fermenté qui est enrichi en protéines, auquel des vitamines, des minéraux et des huiles sont ajoutés dans les quantités stipulées par les réglementations relatives aux produits alimentaires et qui comprend également des matériaux choisis parmi des agents aromatisants, des édulcorants, des arômes, des colorants, des agents stabilisants, des constituants issus de fruits et une fibre alimentaire afin de donner à la préparation les propriétés souhaitées par le consommateur, dans lequel :
- le lait est enrichi en protéines, ensemencé avec des bactéries de l'acide lactique et fermenté jusqu'à ce qu'il se forme du yaourt ayant l'acidité voulue,
- les constituants souhaités sont mélangés avec le yaourt qui a été formé tandis que, dans le procédé, des étapes de pasteurisation et/ou d'homogénéisation sont réalisées si on le souhaite,
**caractérisé en ce que**
a) le lait pour yaourt est enrichi en protéines lactiques, un mélange d'huiles végétales est ajouté et, après les étapes d'homogénéisation, de pasteurisation et de refroidissement nécessaires, le mélange de yaourt et de lait est ensemencé avec une souche de bactérie de l'acide lactique appropriée, après quoi le mélange de yaourt et de lait est laissé à fermenter ; après la fermentation, le yaourt qui s'est formé est remué et refroidi à la température ambiante,
b) un sirop est fabriqué en mélangeant de l'eau avec un édulcorant synthétique, un acide alimentaire et un agent stabilisant; le mélange formé est chauffé à une température sélectionnée ; à cette température sélectionnée, un édulcorant naturel, des fibres alimentaires et un concentré de jus de fruits sont ajoutés et le mélange ainsi obtenu est pasteurisé ; un ou plusieurs colorants, agents aromatisants et un mélange des vitamines et minéraux souhaités sont ajoutés au mélange pasteurisé, après quoi le sirop ainsi formé est ajouté au yaourt formé en a),
c) le yaourt formé en a) et le sirop formé en b) sont mélangés.

14. Procédé selon la revendication 13, **caractérisé en ce que** :
a) les protéines lactiques destinées à enrichir le lait pour yaourt comprennent une quantité supplémentaire de protéines de petit-lait, la teneur en protéines lactiques totale du yaourt formé étant d'au moins 4,2% en poids, tandis que le mélange d'huiles végétales est un mélange d'acide linoléique et d'acide linolénique,
b) le ratio de l'édulcorant naturel sur l'édulcorant synthétique est choisi de façon à fixer à 200 Kcal la valeur calorique d'une portion de 330 grammes du substitut de repas et l'agent stabilisant est de l'amidon natif,
c) le sirop et le yaourt sont mélangés en un ratio en poids de 15:85.

15. Procédé selon les revendications 13 à 14, **caractérisé en ce que** :
a) la teneur en protéines lactiques totale du yaourt formé est de 4,2% en poids et l'acide linoléique et l'acide linolénique sont présents en un ratio en poids de 5:1,
b) l'édulcorant synthétique est présent en une quantité allant jusqu'à 3% en poids, ramenée à la quantité totale d'édulcorants, et l'édulcorant naturel est du sucre, tandis que l'amidon natif est présent en une quantité allant de 0,05 à 1,0% en poids, ramenée à la composition totale du produit.

16. Procédé selon la revendication 15, **caractérisé en ce que** :
b) l'édulcorant synthétique ou un mélange d'édulcorants synthétiques est présent en une quantité allant jusqu'à 2,5% en poids, ramenée à la quantité totale d'édulcorants, tandis que l'amidon natif est présent en une quantité d'environ 0,3% en poids.

17. Procédé selon l'une quelconque des revendications 13 à 16, **caractérisé en ce que** :
a) avant l'ensemencement, les étapes d'homogénéisation, de pasteurisation et de refroidissement se font dans les conditions respectives suivantes : 100 bars, 62°C ; 95°C, 5 minutes et refroidissement à 41 °C,
b) la température choisie est de 75°C et la pasteurisation se fait pendant 15 minutes à 75°C.

18. Procédé selon l'une quelconque des revendications 13 à 17, **caractérisé en ce que** :
c) le mélange qui est formé est soumis à des forces de cisaillement afin de donner la consistance onctueuse souhaitée au mélange et il est ensuite refroidi à la température du réfrigérateur (< 7°C).

19. Procédé selon l'une quelconque des revendications 13 à 18, **caractérisé en ce que** le substitut de repas formé est emballé dans un récipient du type habituel pour des produits laitiers.
